# EUROPEAN PATENT APPLICATION

(11) **EP 0 683 458 A1**
(43) Date of publication of application: **22.11.1995**
(21) Application number: 95480045.4
(22) Date of filing: 12.04.1995
(51) Int. Cl.: G06F 12/08

(54) **Programmable content mode level two cache**

(30) Priority: 19.05.1994 US 245782
(71) Applicant: International Business Machines Corporation, Armonk, N.Y. 10504 (US)
(72) Inventor: Shippy, David James, Austin, Texas 78759 (US); Shuler, David Benjamin, Austin, Texas 78726 (US)
(74) Representative: de Pena, Alain

(57) **Abstract**

A level 2 cache is provided wherein the content mode of the cache can be altered by a system user. This allows the L2 cache to be programmed to store only data, only instructions, or both. A storage control unit (SCU) receives a request to retrieve data or instructions from the central processing unit (CPU) and places this request into a L2 cache request queue. A storage control register is provided in the SCU which is accessible by system software. Control logic is then used to gate the processor requests to the L2 based upon the contents of the storage control register. Thus, for a particular value in the storage control register, only instructions can be accessed in the cache. That is, the read and write enable functions of the L2 cache are controlled such that only instructions are written to and read from the cache. Similarly, for another unique value in the storage control register, only data will be accessed in the cache. Yet another value will allow both data and instructions in the L2 cache to be accessed by the CPU.

## Description

### BACKGROUND OF THE INVENTION

### Field of the Invention

The present invention generally relates to a data processing system having a memory subsystem with a level two (L2) cache. More particularly, the system includes a programmable content mode for the L2 cache such that a user may designate that either data or instructions only, or a combination of data and instructions are stored therein.

### Description of Related Art

Those skilled in the art will understand how different program applications running on a computer system will have requirements. That is, some applications are instruction intensive and issue a great number of instructions for execution by a CPU when compared to data. Other program applications are data intensive and a small number of instructions are used by the CPU to operate on a great deal of data. Typically, graphics intensive applications require a large amount of data to be operated on in order to display colors, pixel depths and the like. Similarly, numerically intensive applications, such as scientific and engineering programs which utilize the floating point execution unit will use a lot of data. On the other hand word processing applications use minimal data when compared to the instructions used. Also, transaction processing applications utilize a large amount of instructions, but not much data. Additionally, many systems include both a level 1 (L1) data cache and L1 instruction cache in the CPU. Depending on the type of system, the L1 data cache may be much larger than the L1 instruction cache. In this case, it would be advantageous to have the L2 cache be designated as containing instructions only. This will allow the CPU faster access to instructions than would be available if they had to be retrieved from main memory, due to overcapacity in the L1 and L2 caches. Of course, on systems where the L1 instruction cache is much larger than the L1 data cache it may be desirable, for similar reasons, to make the L2 cache data only.

Therefore, it can be seen that a need exists for a caching system that is flexible enough to allow a user to change the content mode of a level 2 cache in order to accommodate a particular program application to be run on the data processing system.

Conventional memory systems typically use a level 2 cache that will store either a combination of data and instructions, or either data or instructions. For example, U.S. patent 4,707,784 describes a cache memory having two parts, one designated primarily for instruction data and the other designated for operand data. U.S. 4,899,275 is a cache memory management system which can function as either an instruction cache with instruction pre-fetch capability, and as a data cache system with an address register for received data addresses from the CPU. Similarly, U.S. 4,502,110 discloses a memory control apparatus that includes a pair of equal capacity cache memories, one for storing a portion of the instructions located in main memory and one for storing a portion of operand data from main memory.

U.S. 5,185,878 combines a cache memory and cache controller on a single chip. This integrated cache unit can be programmed to perform certain functions, such as preload, invalidate, reset, and the like. Two separate integrated cache units are provided, one for instructions and the other for data. IBM Technical Disclosure Bulletin, vol. 22, no. 11, April 1980, pps. 5183 discusses splitting a conventional cache into two parts, an instruction cache and a data cache. IBM Technical Disclosure Bulletin, vol 27, no. 12, May 1985 discloses a multiprocessing system wherein a shared cache includes instructions only, and each processor has a separate non-shared cache containing data only.

It can be seen that conventional systems disclose mixed caches, including data and instructions, as well as separate caches that contain only data or instructions. However, none of the prior art systems show a single cache unit having a programmable content mode which will allow a user to change the mode of the cache to store mixed instructions and data or either instructions only or data only. Thus, a system that would provide a user the ability to easily change the content mode of a cache would be highly desirable.

### SUMMARY OF THE INVENTION

In contrast to the prior art, the present invention is a level 2 cache wherein the content mode of the cache can be altered by a system user. This allows the L2 cache to be programmed to store only data, only instructions, or both. Broadly, the present invention includes a storage control unit (SCU) which combines the operations of a L2 cache controller and a memory controller. This SCU receives a request to retrieve data or instructions (hereinafter "information") for the central processing unit (CPU) into a L2 cache request queue. A storage control register is provided in the SCU which is accessible by system software. Control logic is then used to gate the processor requests to the L2 based upon the contents of the storage control register. Thus, for a particular value in the storage control register, only instructions can be accessed in the cache. That is, the read and write enable functions of the L2 cache are controlled such that only instructions are written to and read from the cache. Similarly, for another unique value in the storage control register, only data will be accessed in the cache. Yet another value will allow both data and instructions in the L2 cache to be accessed by the CPU.

Various means of altering the contents of the storage control unit can be utilized. For example, the value can be stored in system read only memory (ROM) such that upon initialization of the system, the value is stored in the storage control register. Additionally, setting a compiler option when a particular program application is compiled will cause the application to set the storage control register to the desired value.

These and other objects, features and advantages will become apparent to those skilled in the art upon considering the subsequent description taken in conjunction with the attached drawings.

### BRIEF DESCRIPTION OF THE DRAWINGS

Figure 1 is a block diagram illustrating a data processing system including a memory subsystem having a programmable L2 cache in accordance with the present invention; and
Figure 2 is a schematic diagram of the storage control unit of the present invention which allows the L2 cache to be programmed to include only data or instructions, or both.

### DETAILED DESCRIPTION OF THE PREFERRED EMBODIMENTS

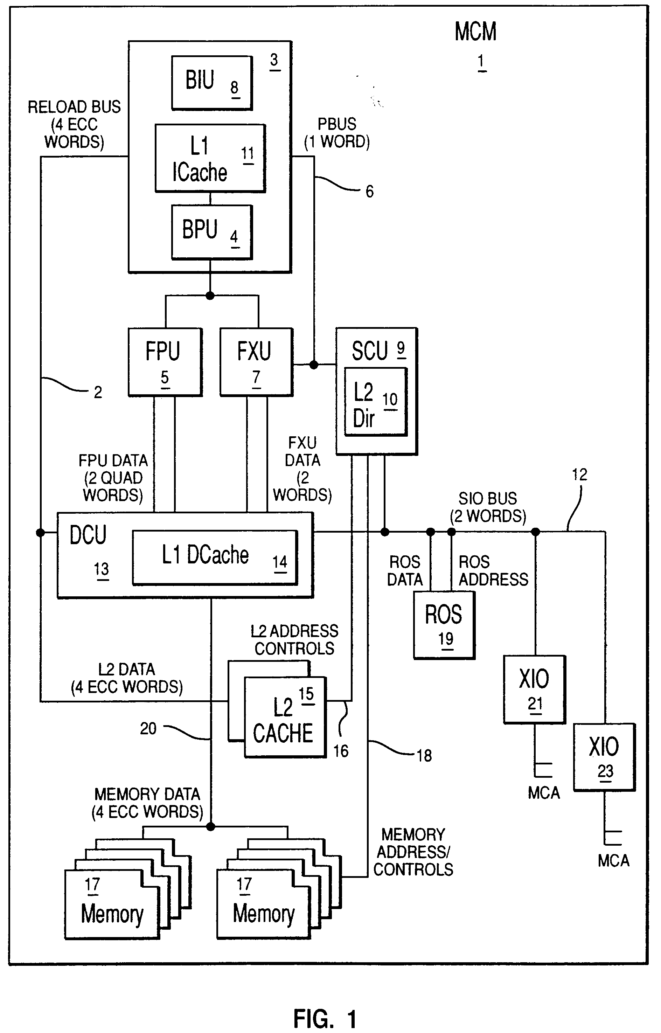

Referring to Figure 1, a block diagram of the overall structure of the present invention is shown wherein reference numeral 1 represents a multichip module superscalar processor chip set (CPU), such as is used in a RISC System/6000 workstation manufactured by IBM Corporation (RISC System/6000 is a trademark of IBM). Instruction cache unit 3 includes a branch processing unit 4, branch instruction unit (BIU) 8 and a level one instruction cache 11. The branch instruction unit 8 and branch processing unit (BPU) 4 process the incoming instructions, and dispatches these instructions to the floating point unit (FPU) 5 and fixed point unit (FXU) 7. The BPU provides all of the branching, interrupt, and condition code functions within the system. Those skilled in the art will understand that FPU 5 executes floating-point instructions while FXU 7 executes fixed point arithmetic operations (see IBM RISC System/6000 Technology, published by IBM, 1990, pages 16-42, for a more detailed description of the RISC System/6000 processing unit).

Storage control unit (SCU) 9 controls access between the CPU and the level 2 cache 15 and main memory 17. SCU 9 includes a level 2 cache directory 10 which is used to compare addresses of the data or instructions ("information" as used herein will refer to both data and instructions) in the L2 cache with the address of desired information to determine if a L2 cache hit or miss has occurred. It can be seen from Figure 1 that SCU 9 combines the cache and memory control functions on a single chip and does not pass data from either the L2 cache 15 or memory 17 to the CPU. SCU 9 only provides address and control information to the L2 and memory. The unique ports from: (1) L2 15 to DCU 13 and ICU 3; and (2) memory 17 to DCU 13 allow data to be provided directly to the CPU without the overhead associated with intermediately storing the data in SCU 9. Level one data cache unit (DCU) 13 is connected to FPU 5 and FXU 7 and stores recently accessed data which is likely to be needed again by the FPU or FXU. DCU 13 includes registers, latches and the like (not shown), along with the data cache (D-cache) 14 which only stores data (not instructions). It can be seen that the architecture of a preferred system implementing the present invention has separated the L1 cache into a data storage component 14 and an instruction component (I-cache) 11. In this way, the data and instructions stored in the L1 cache system are physically closer to the respective processing units which use data and instructions. That is, I-cache 11 is in close physical proximity to BPU 4 (contained in ICU 3) such that instructions stored in I-cache 11 can be easily and quickly provided to BPU 4. Similarly, D-cache 14 is located close to FPU 5 and FXU 7 which allows these execution units ready access to the data stored in D-cache 14. L2 cache 15 is a plurality of static random access memory (SRAMs) devices which are connected to both the storage control unit 9 and reload bus 2. Requests for information stored in L2 cache 15 are received from SCU 9, and if found in the L2, is provided to the requesting processing unit and the L1 cache along reload bus 2.

The third level of memory is main memory 17 which is a set of dynamic random access memory devices (DRAMs) which are connected to SCU 9, and DCU 13 (which includes L1 cache 14). Main memory 17 is the slowest memory device in the system of the present invention, in that it requires the greatest number of clock cycles to retrieve information therefrom. Also shown in Figure 1, is PBUS 6 which transmits the requests for data or instructions to SCU 9. System input/output bus (SIO) interconnects the DCU 13 (and the various processing units) with the input/output (I/O) control chips (XIO) 21 and 23. These XIO chips 21, 23 coordinate the transfer of data between an external bus, such as the Microchannel (MCA) bus (Microchannel is a trademark of the IBM Corporation) and the internal CPU bus used to interconnect the various processing units. A read only storage (ROS) chip 19 is shown, also connected to SIO bus 12, which provides some of the basic routines and codes used to boot the CPU, such as power on self test (POST) and the like.

It can be seen from Figure 1 that ICU 3 not only sends requests for information to SCU 9, via PBUS 6, but also forwards instructions to FPU 5 and FXU 7 for execution. Both the FPU 5 and FXU 7 are connected to L1 DCU 13 by two quad word buses for transferring information between the L1 cache 14 and the processing units. FXU 7 is also connected to PBUS 6 such that the fixed point unit can also request information from L1 cache 14. L2 cache 15 receives address and control information off of bus 16, interconnecting it with SCU 9, and is also connected by reload bus 2 directly to FPU 5 and FXU 7 through DCU 13. Additionally, reload bus 2 directly connects L2 cache 15 to BPU 4 in ICU 3. Main memory 17 receives address and control information off of bus 18 interconnecting it with SCU 9 and is also directly connected to L1 cache 14 by bus 20.

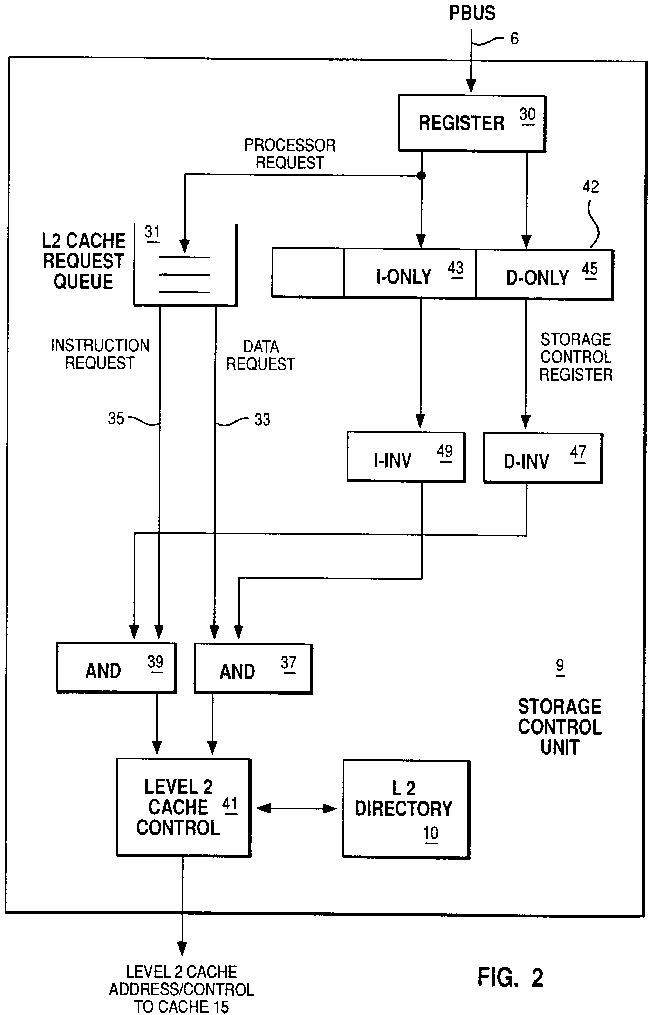

Figure 2 is a block diagram of the components of SCU 9 which implement the present invention. PBUS 6 is shown which transmits requests for information from ICU 3 and FXU 7 to SCU 9. The processor requests are stored in a register 30 prior to being provided to L2 cache request queue 31. Storage control register 42 includes an I-only field 43 and a D-only field 45. Depending on the values in these fields, only data or only instructions, or both data and instructions will be provided to the L2 cache 15. It can be seen that register 30 is interconnected to storage control register 42. This allows instructions received from PBUS 6 into register 30 to alter the content of control register 42 in order to switch the content mode of the L2 cache. This feature provides a great deal of flexibility, since the content mode of the L2 cache can be altered "on the fly" by an instruction that will set the values in control register 42. Instruction inverter (I-inverter) 49 is connected to the I-only field 43 of storage control register 42 and data inverter (D-inverter) 47 is connected to the D-only field 45 of storage control register 42.

The L2 cache request queue 31 outputs data requests on a data request line 33 and instruction requests on instruction request line 35. The instruction request line 35 is input to an AND gate 39, and data request line 33 is input to another AND gate 37. The value in I-inverter 49 is also provided to AND gate 37, while the value in D-inverter 47 is input to AND gate 39. The AND gates 37, 39 then output a signal to L2 cache control logic 41 specifying the content mode of the L2 cache. A L2 cache directory 10 is searched in conjunction with a request to transfer instructions or data between the L2 cache. L2 directory 10 includes the addresses of the data and/or instructions that are to be accessed by the processing system of the present invention.

An example of the operation of the present invention will now be provided in conjunction with Figure 2. For the purposes of this example assume that it is desired for the L2 cache to contain only instructions and no data. In this case a logical 1 is placed in the I-only field 43 of the storage control register and a logical 0 is stored in the D-only field 45. These values are placed in the fields 43, 45 by one of a plurality of methods. These techniques including programming the software to place the desired binary values in the fields, setting a compiler option to place the values in register 42 at the time the application being run is compiled. Additionally, the desired values can be placed in read only memory and stored each time the system is booted. Further, as mentioned above, the content mode (instructions or data or mixed) can be changed "on the fly" during execution of a program by inserting an instruction that will alter the content of fields 43, 45 to the desired value. After passing through inverters 47 and 49, a logical 0 is input to AND gate 37 and a logical 1 is input to AND gate 39. In the case of an instruction request being input along line 35 to AND gate 39, the output would be valid and when provided to L2 control logic 41 will allow the L2 read/write to be enabled for the instruction in L2 queue 31.

However, a logical 0 will be provided to AND gate 37 and when a data request is also input to the AND gate, there will be no output provided to L2 control logic 41 such that the L2 will not be enabled for the data to be stored in, or retrieved from the cache. Thus, it can be seen how a logical (1, 0) placed in storage control register 42 will cause the L2 cache to process instructions only.

In order for the cache to process only data, a logical (0, 1) will be placed in the I-only and D-only fields 43 and 45, respectively. In this manner, a logical 0 will be provided to AND gate 39 causing the instruction request from the L2 request queue to be blocked. A logical 1 will be provided to AND gate 37 such that a valid request signal is output from gate 37 when a data request is also input. This will cause the L2 control logic 41 to enable the L2 to read and write for data requests, but not instruction requests.

In the event that a mixed mode is desired a logical (0, 0) is placed in I-only field 43 and D-only field 45. Thus, a logical 1 is then output from both of the inverters 47, 49 and input to both AND gates 39, 37. This will cause a valid signal to be output when either a data request or an instruction request is input to the AND gates. The L2 control logic will then enable the cache for both instructions and data. A logical (1, 1) will cause the L2 cache to be disabled for both instructions and data. In this case, a logical (0, 0) will be input to both of the AND gates 37 and 39 such that neither data requests nor instruction requests will cause a valid signal to be output from either AND gate 37 or 39.

As noted above, several methods are available for altering the contents of storage control register 42. For example, storing the desired contents in read only storage (ROS) 19 will cause the desired values to be placed in register 42 each time the computer system is initialized.

A particular program application that operates most efficiently with, e.g. the L2 enabled for instructions or data only, the L2 in a particular mode can be reprogrammed to alter the contents of the register 42. In this case, when the program in invoked on the computer system, the software will change the contents in the register 42 to the desired values. Thus, the program will then be run with the L2 cache operating in the most efficient mode.

Further, when a program application is compiled a compiler option can be selected that will cause the program to initialize the contents of the storage control register 42 to those values that puts the L2 cache in the content mode that will allow the program to run most efficiently.

Thus, it can be seen that a need exists for a system that will allow a cache to be operated in distinct content modes. The present invention provides a system that provides for the L2 cache to be operated in either instruction or data only mode, as well as, a mixed data and instruction mode. This allows the configuration of the data processing system to be changed between modes, depending on the type of application to be run on the system, the type of information to be stored in the cache, or other parameters. Further, the content mode of the cache of the present invention is capable of being changed by several well known programming techniques, allowing the content mode to be changed using the method most familiar to the user.

## Claims

1. A data processing system including a cache, comprising:
a central processing unit having a storage control unit for controlling said level two cache;
means, within said storage control unit, for causing a content mode for said level two cache to be altered.

2. A system according to claim 1 wherein said means for causing, comprises:
means for receiving a request from said central processing unit to transfer information between said cache and said processing unit; and
means for supplying said request to a cache control circuit.

3. A system according to claim 2 wherein said means for causing further comprises means for switching between said first content mode and said second content mode.

4. A system according to claim 3 wherein said first content mode includes only data information and said second content mode includes only instruction information.

5. A system according to claim 4 wherein said means for switching comprises means for inhibiting said means for causing from supplying said request for instruction information to said cache control circuit when said cache is in said first content mode.

6. A system according to claim 5 wherein said means for switching further comprises means for inhibiting said means for causing from supplying said request data information to said cache control circuit when said cache is in said second content mode.

7. A system according to claim 6 wherein said means for switching comprises means for changing the content mode to a third mode including data information and instruction information.

8. A system according to claim 7 wherein said means for switching comprises means for providing all of said requests to said cache control circuit when said cache is in said third content mode.

9. A method of changing a content mode of a cache contained in a data processing system, comprising the steps of:
providing a central processing unit having a storage control unit for controlling said level two cache;
causing the content mode for said cache to be altered.

10. A method according to claim 9 wherein said step of causing, comprises the steps of:
receiving a request from said central processing unit to transfer information between said cache and said processing unit; and
supplying said request to a cache control circuit.

11. A method according to claim 10 wherein said step of causing further comprises the step of switching between said first content mode and said second content mode.

12. A method according to claim 11 wherein said first content mode includes only data information and said second content mode includes only instruction information.
